# EUROPEAN PATENT APPLICATION

(11) **EP 4 803 458 A1**
(43) Date of publication of application: **09.09.2026**
(21) Application number: 25210217.3
(22) Date of filing: 21.10.2025
(51) Int. Cl.: B65G 47/90, B65G 1/04, B65G 1/137, G06Q 10/087

(54) **HANDLING SYSTEM**

(30) Priority: 03.03.2025 EP 25161413
(71) Applicant: AutoStore Technology AS, 5578 Nedre Vats (NO)
(72) Inventor: FAGERLAND, Ingvar, 5578 Nedre Vats (NO); MATRE, Dag Arne, 5578 Nedre Vats (NO)
(74) Representative: Kilburn & Strode LLP

(57) **Abstract**

The disclosure relates to a computer-implemented method of inserting one or more items into an automated storage and retrieval system. The method comprises sending, to a warehouse management system, a first signal indicating that a port of the automated storage and retrieval system is ready to receive the one or more items from a component of the warehouse management system, determining that the one or more items have been received at the port, responsive to determining that the one or more items have been received at the port, sending a second signal to the warehouse management system indicating that the one or more items have been received at the port, determining that a bin of the automated storage and retrieval system has been received at the port, responsive to determining that the one or more items and the bin have been received at the port, causing the one or more items to be transferred to the bin, sending a third signal to the warehouse management system indicating that the one or more items have been transferred to the bin, determining that the bin has been collected by a robot of the automated storage and retrieval system, and responsive to determining that the bin has been collected by the robot, sending a fourth signal to the warehouse management system indicating that the bin has been collected by the robot.

## Description

### TECHNICAL FIELD

The disclosure relates to a handling system. More particularly, it relates to a system for handling items in an automated storage and retrieval system, and a method for inserting items into, or extracting items from, an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

When the storage bins are to be processed for any reason, the goods, items, or containers within the storage bin must usually be lifted into or out of the storage bin. In some cases, goods from storage bins may be removed from or placed into storage bins by human operators or using robotic arms. Robotic arms may be limited in the type of goods they are capable of handling. For instance, robotic arms may have a weight limit, a size limit, and may be unable to be able to handle certain classes of items, such as fragile items. Still, is a desire to provide an automated system that does not rely on humans, but that is able to handle a variety of items. It will be appreciated that systems which can simply, and automatically manipulate goods, and fragile items with care and low pressure may improve up time of automated storage and retrieval systems because damage to goods may lead to leakages, or debris in the system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a goods handling system according to an embodiment of the present disclosure;
Fig. 6 shows the goods handling system of Fig. 5 with a bin in a lowered position;
Fig. 7 shows the goods handling system of Fig. 5 with a bin in a receiving position;
Fig. 8 shows the goods handling system of Fig. 5 with a bin in a raised position;
Fig. 9 shows a goods handling system according to another embodiment of the present disclosure;
Fig. 10 shows an alternative perspective of the goods handling system of Fig. 9;
Fig. 11A shows a side-on view of a goods handling system according to an embodiment of the present disclosure;
Fig. 11B shows a side-on view of a goods handling system according to another embodiment of the present disclosure; and
Figs. 12 - 15 show flowcharts for different methods of transferring items according to the present disclosure.

### DETAILED DESCRIPTION

In overview, the disclosure relates to computer-implemented methods for inducting one or more items into, or extracting one or more items from, an automated storage and retrieval system. The methods generally comprise a protocol through which an automated storage and retrieval system (ASRS) communicates with a warehouse management system (WMS) to facilitate the induction or extraction of one or more items via a port of the automated storage and retrieval system. The methods enable the WMS to synchronise with the ASRS such that items can be automatically inducted or inserted into the ASRS, or automatically extracted from the ASRS, without requiring human intervention.

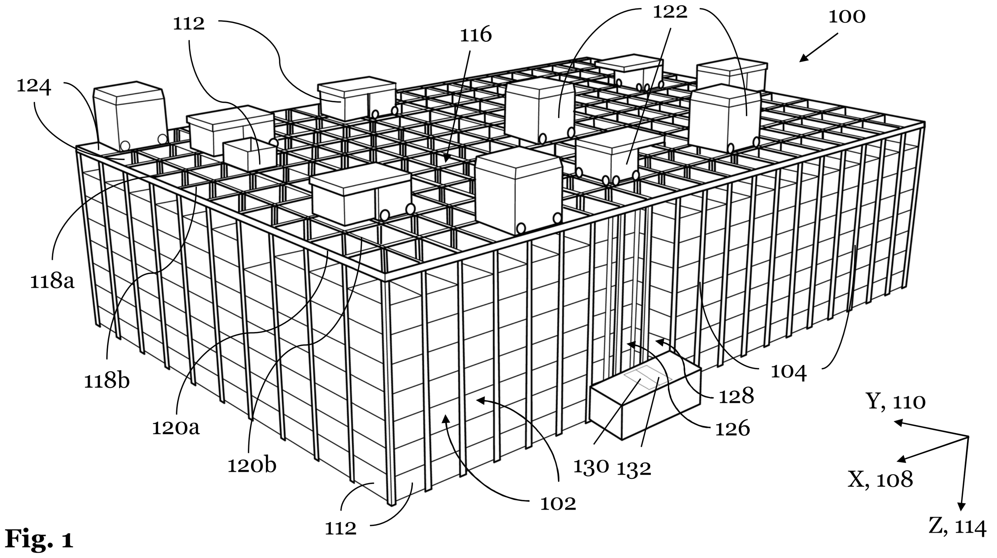

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

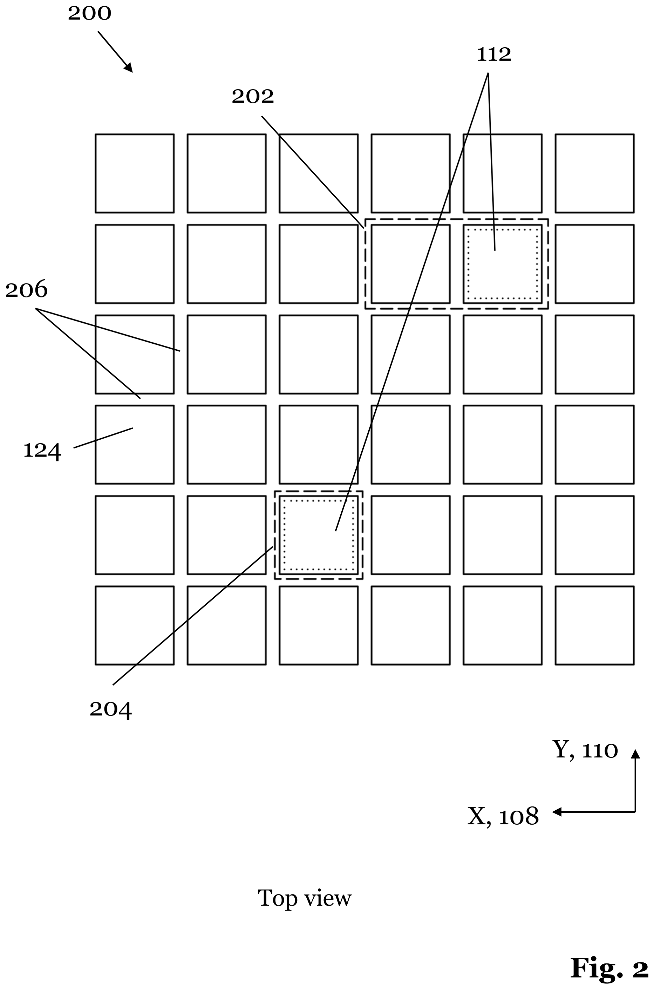

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

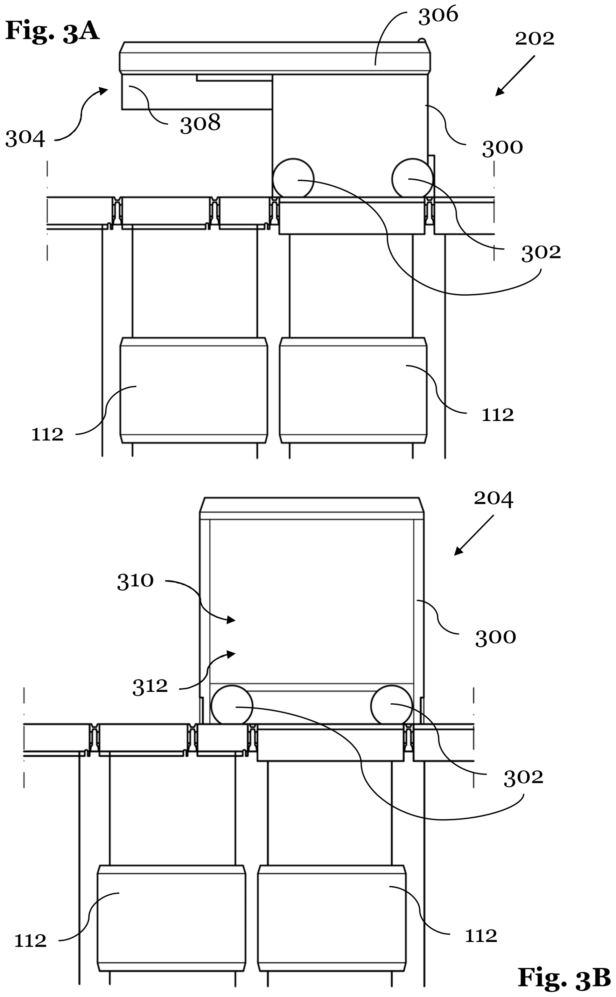

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

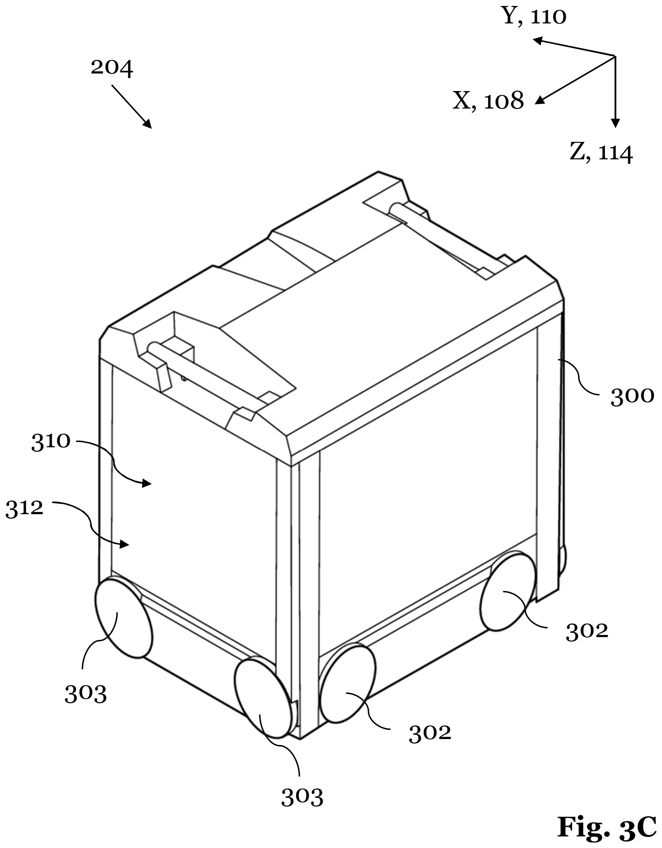

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

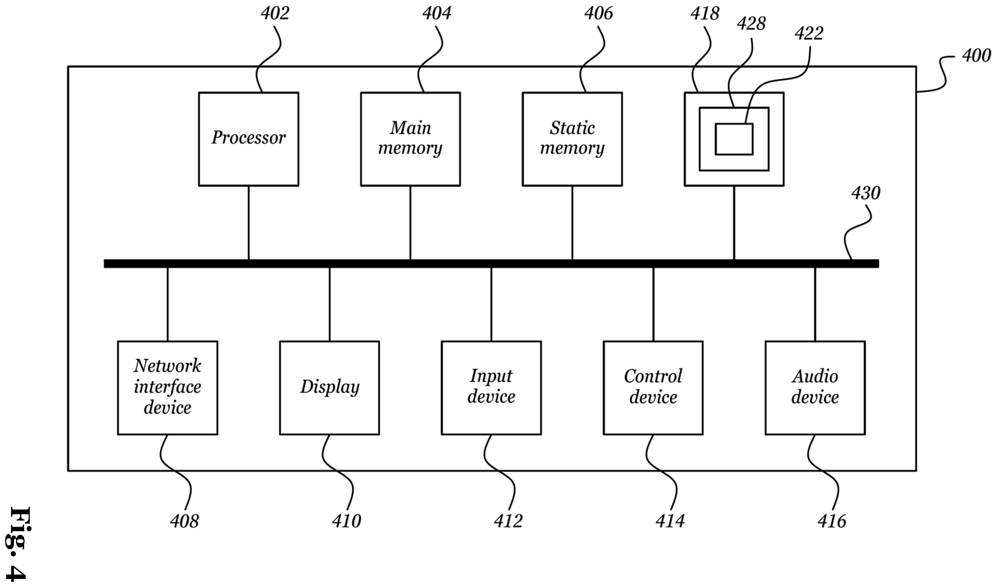

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

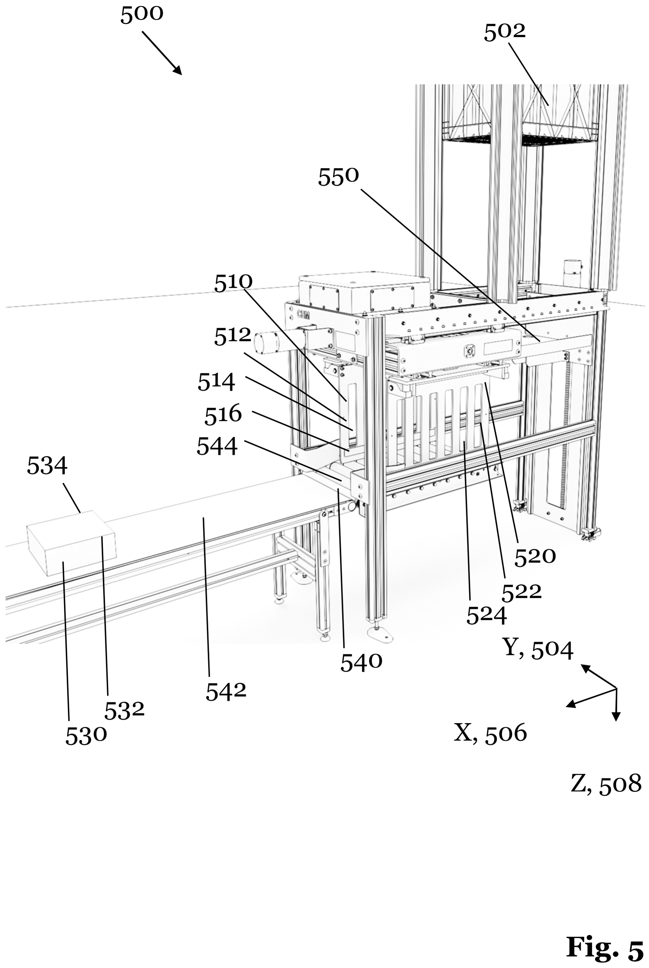

Fig. 5 shows a goods handling system 500 according to one embodiment for handling items in an automated storage and retrieval system (ASRS) as described herein. Specifically, the goods handling system 500 is configured to induct one or more items into the ASRS, or extract one or more items from the ASRS. As shown in Fig. 5, a storage bin 502 may be provided from a grid 100 of a storage system, such as the grid 100 shown in Fig. 1. The storage bin 502 is shown in Fig. 5 as descending into the manipulator 500 (e.g., descending through a port column of the grid 100) however, the storage bin 502 may arrive at the manipulator 500 from other directions, such as from any side of the manipulator 500, or indeed from below the manipulator 500.

The goods handling system 500 comprises a first gripping plate 510. The first gripping plate 510 is shown having a first gripping surface 512. The first gripping plate 510 is further shown in Fig. 5 having a plurality of cut-outs 514. The first gripping plate 510 may not include the plurality of cut-outs 514 and instead may be a substantially contiguous plate. Additionally shown in the embodiment of Fig. 5, the first plate 510 may comprise a first grip 516. The first grip 516 may be a protrusion on the first gripping surface 512, or the first grip 516 may be a separate component attached to the first gripping surface 512 and protruding from the first flat surface 512. The first grip 516 may comprise a reinforcing material and/or the first grip 516 may comprise a high friction material. High friction material refers to the material type being one that exhibits a greater friction coefficient with other materials than the material of the first plate 510. For example, where the first plate 510 may comprise steel or aluminium, the first grip 516 may comprise paint, silicone, or a rough or knurled surface.

Fig. 5 also shows that the goods handling system 500 comprises a second gripping plate 520. The second gripping plate 520 is shown having a second gripping surface 522. The second gripping plate 520 is further shown in Fig. 5 having a plurality of cut-outs 524. The second plate 520 may not include the plurality of cut-outs 524 and instead may be a substantially contiguous plate. Additionally shown in the embodiment of Fig. 5, the second gripping plate 520 may comprise a second grip (not visible). The second grip may be a protrusion on the second gripping surface 522 similar to the first grip 516 on the first gripping surface 512, or the second grip may be a separate component attached to the second flat surface 522 and protruding from the second flat surface 522. The second grip may comprise a reinforcing material and/or the second grip may comprise a high friction material. High friction material refers to the material type being one that exhibits a greater friction coefficient with other materials than the material of the second plate 520. For example, where the second plate 520 may comprise smooth finish steel or aluminium, the second grip may comprise paint, silicone, or a rough or knurled surface.

The first gripping plate 510 and the second griping plate 520 are parallel to one another and offset from each other in a first, Y, direction 504. The first gripping plate 510 and the second gripping plate 520 are each movable or actuatable in the first, Y, direction 504 shown in Fig. 5. In this way, the first gripping plate 510 and the second gripping plate 520 may be moved inwardly towards each other, or the first gripping plate 510 and the second gripping plate 520 may be moved apart from each other. The first gripping plate 510 and the second gripping plate 520 may be moved independently or together. Where the first griping plate 510 and the second gripping plate 520 are both moved inwardly toward each other, the first plate 510 and the second plate 520 may come together to clamp a container, such as container 530 in Fig. 5. The container 530 is shown as a box having at least two opposite sides 532, 534. The two opposite sides of the container 530 are substantially parallel to one another, such that when the first plate 510 and the second plate 520 come together to clamp the container 530, the container 530 may be securely held or guided with the first plate 510 and the second plate 520. Whilst a box has been shown, the container 530 may be in many different forms suitable for being contained in the storage bin 502. For example, the container 530 may comprise a plurality of items wrapped together, such as being tightly wrapped in shrink wrap (for example drinks bottles), or securely contained in a tray. In any case, the container 530 may include a first side 532 and a second side 534 which are substantially parallel and opposite to one another so as to be clamped between the first plate 510 and the second plate 520.

More generally, it would be appreciated that the first gripping plate 510 and the second gripping plate 520 may be capable of clamping any type of item that is sized appropriately (i.e., sized to be able to fit in between the two gripping plates when arranged at their maximum distance from each other). For example, the gripping plates may be capable of handling containers or items that do not necessarily have parallel opposing sides.

Once the first gripping plate 510 and the second gripping plate 520 have been moved together to clamp the container 530, the first gripping plate 510 and the second gripping plate 520 may move together in unison and parallel to the first flat surface 516 and the second flat surface. That is, once the first gripping plate 510 and the second gripping plate 520 have moved together in opposite directions in line with the first (Y) direction 504, the first plate 510 and the second plate 520 may move together in either the second, X, direction 506, the third, Z, direction 508, or in any combination of the first 504, second 506, and third 508 directions. Once the first gripping plate 510 and the second gripping plate 520 are clamping the first container 530, the first plate 510 and the second plate 520 may move together to guide the container 530 in any direction.

In a preferred embodiment, the gripping plates 510 and 520 are configured to move in the Y direction (to clamp and release items or containers positioned therebetween), and the X direction (to transport goods towards or away from a bin) only. That is, in this preferred embodiment, the gripping plates 510 and 520 are not capable of moving vertically, i.e., in the Z direction, and can only move in a horizontal direction.

The gripping plates 510 and 520 may therefore achieve guiding the container 530 in the second (X) direction 506 along a conveyor 540. The conveyor 540 may comprise a plurality of driven rollers 544 that are capable of driving any container or item disposed thereon horizontally, in the second (X) direction. Thus, in combination with the first plate 510 and the second plate 520, the conveyor may drive the container 530 horizontally in the second (X) direction 506, whilst the first plate 510 and the second plate 520 act to guide the container 530. For example, the first plate 510 and the second plate 520 may be configured to move in the second (X) direction 506 at the same velocity at which the conveyor 540 is driving the container 530 in the second direction 506. Thus the conveyor 540 imparts the force which moves the container 530, whereas the first plate 510 and the second plate 520 do not impart a horizontal force on the container 530. Alternatively, the first plate 510 and the second plate 530 may also impart a driving force on the container 530 such that the conveyor 540 and the first plate 510 and the second plate 520 all impart some horizontal force to drive the container. Alternatively still, the container 530 or any item for generally may be moved in the second (X) direction as a result of the force imparted by the first and second gripping plates only.

As described in more detail below, the goods handling system 500 may interface with a conveyor 542 of an external warehouse management system to facilitate the transport of items or containers 530 towards or away from the goods handling system. The interfacing of the conveyor of the warehouse management system with the goods handling system 500 is described in more detail below.

Whilst in a preferred embodiment, the gripping plates are configured to move in the first (Y) and second (X) direction only, it will equally be appreciated that, in some other embodiments, the first gripping plate 510 and the second gripping plate 520 may additionally be moved together in the third, Z, direction 508. This is shown as the vertical direction in Fig. 5. By moving the first plate 510 and the second plate 520 in the vertical direction, a container 530 or other item clamped between the two gripping plates may be lowered into, or lifted out of a storage bin 502. Where the first plate 510 and the second plate 520 are moving to lift or lower a container 530 or other item, the first plate 510 and the second plate 520 are clamped together with a force sufficient to support the weight of the container 530 from the sides 532, 534 of the container 530, or more generally to support the weight of the item arranged therebetween.

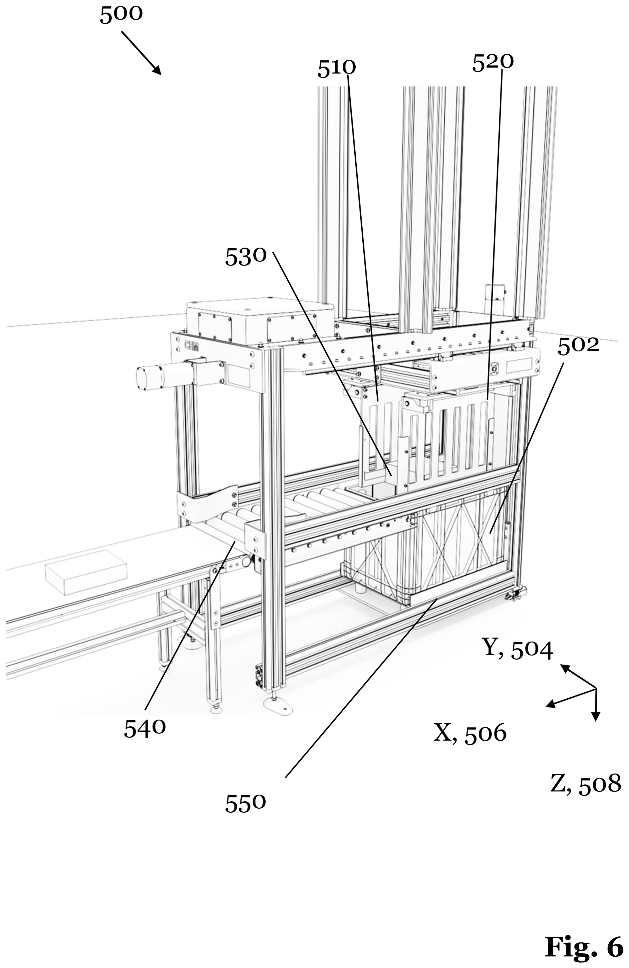

Referring now to Fig. 6, the goods handling system 500 is shown interacting with a bin 502 of the storage and retrieval system. In the position shown, the bin has been lowered through the port column by a robot (e.g., robot 122) onto a platform 550 of the goods handling system. The platform 550 is depicted in Fig. 5 in a raised position whereby it receives the bin 502 thereon, such that the platform 550 supports the bin 502 from beneath. After receiving the bin 502, the platform descends in the vertical (Z) direction from the raised position shown in Fig. 5 to a lowered position as shown in Fig. 6. When the platform is in the lowered position shown in Fig. 6, the gripping plates 510, 520 are able to move across in the second (X) direction from above the conveyor 540 to above the bin 502. That is, in when in the lowered position, the platform 550 supports the bin 502 at a vertical height such that the top of the bin's sidewalls are lower than the bottom of the gripping plates 510, 520, allowing the gripping plates 510, 520 to be moved in the X direction between a position above the bin 502 and a position above the port conveyor 540.

The operation of inserting a container 530 into a bin 520 using the goods handling system 500 will now be described with reference to Figs. 5, 6, and 7. Whilst reference is made to a container 530, it will be appreciate that the operation described below equally applies to any other suitable item that may be handled by the gripping plates 510, 520 of the goods handling system 500.

To insert a container 530 into a bin 502 using the goods handling system 500, the container 530 is first received by the goods handling system from an external source, such as the conveyor 542. The conveyor may be controlled by a separate, external, warehouse management system. The container is received on the port conveyor 540 of the goods handling system 500 such that the container is disposed in between the gripping plates 510, 520.

At the same time at which the container 530 is received on the port conveyor 540, or at an earlier time, or at a later time, a bin 502 is received on the platform 550, which may be in the raised position shown in Fig. 5. After the bin 502 has been received on the platform 550, the platform is lowered to the lowered position (as shown in Fig. 6) such that the vertical height of the bin is lower than the gripping plates 510, 520.

After the bin has been lowered, the gripping plates clamp the container 530 and transport it along the second (X) direction to a position where the container 530 is suspended in between the gripping plates 510, 520 in a position directly over the bin.

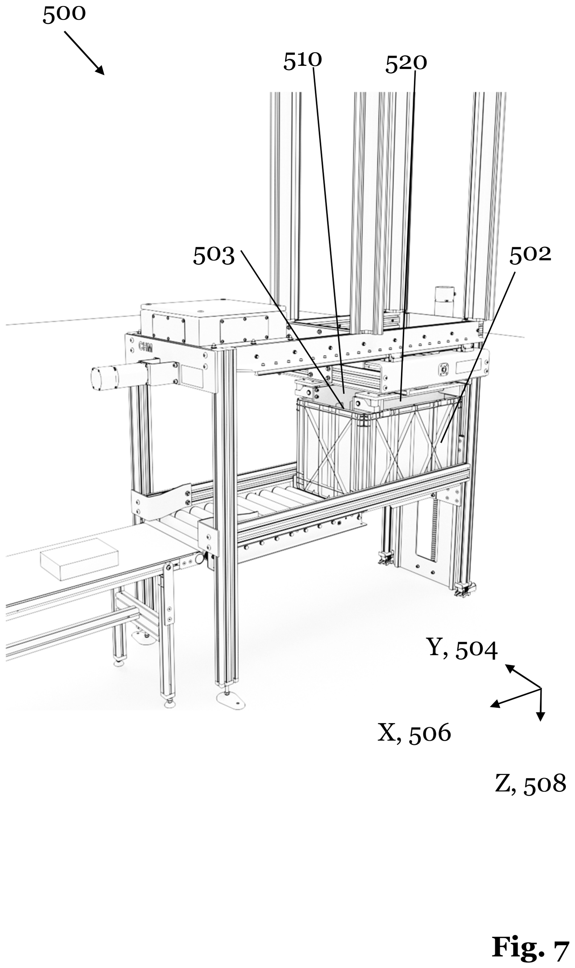

Once the gripping plates 510, 520 have positioned the container 530 directly over the bin 502, the platform may raise the bin 502 to a receiving position as shown in Fig. 7. The receiving position may be a position between the raised and the lowered position. When the platform 550 is in the receiving position, the bin 502 is arranged at a vertical height such that the bin 502 surrounds the gripping plates 510, 520 as can be seen in Fig. 7. In other words, the gripping plates are positioned inside the bin 502 due to the bin being raised up towards the gripping plates 510, 520. In the receiving position, the base of the bin is arranged at a vertical height such that it is situated very close to, or even abuts, the underside of the gripping plates 510, 520. That is, when in the receiving position, the vertical height of the base of the bin is substantially equal to the vertical height of the bottom of the gripping plates 510, 520. Consequently, the base of the bin is at substantially the same vertical height as the underside of the container 530 clamped between the gripping plates 510, 520.

Although not shown in the figures, in an alternative to raising the bin 502 to the receiving position using the platform 550, the gripping plates 510, 520 may be lowered in the Z direction into the bin 502 whilst the bin remains in the lowered position. That is, the gripping plates 510, 520, whilst clamping the container 530, may lower the container into the bin 502 to the point that the underside of the container 530 rests on the base of the bin 502.

To insert the container 530 into the bin 502 (either after the bin has been raised to the receiving position or after the gripping plates have been lowered into the bin), the gripping plates 510, 520 release the container by moving apart from each other in the Y direction, leaving the container 530 to rest on the base of the bin. After releasing the container, the platform 550 then lowers the bin 502 containing the container 530 to the lowered position to allow the gripping plates 510, 520 to return to their position above the port conveyor 540 by moving in the X direction. Alternatively, (if the gripping plates are lowered into the bin instead of the bin being raised around the gripping plates), after releasing the container 530 inside the bin 502, the gripping plates may be raised out of the bin 502 in the Z direction whilst the bin remains in the lowered position, before the gripping plates are moved in the direction to their original position above the port conveyor 540.

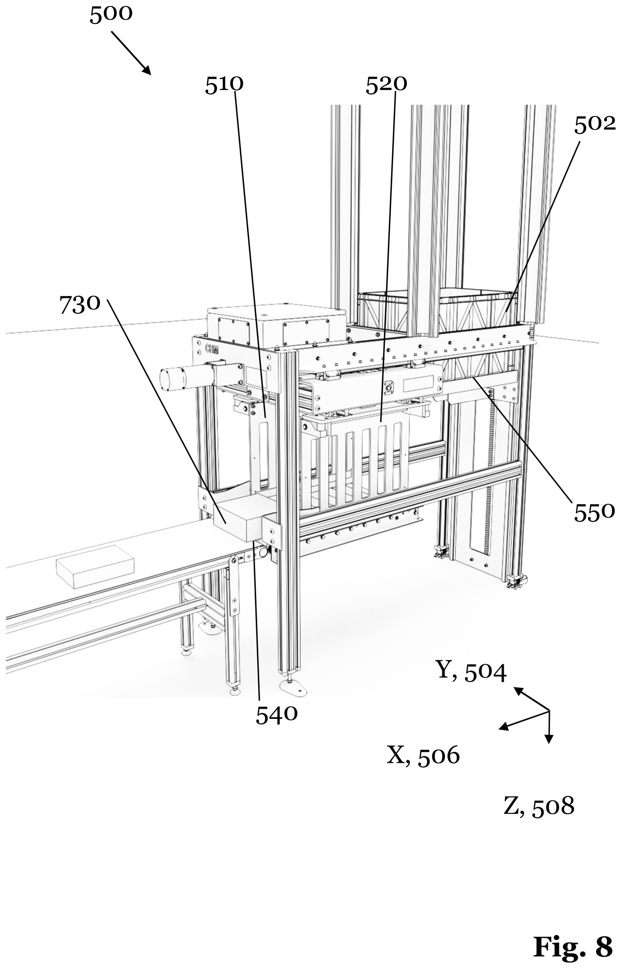

With reference to Fig. 8, once the gripping plates 510, 520 have returned to the position above the port conveyor 540 (the gripper position shown in Fig. 8), the platform 550 raises the bin containing the container 530 to the raised position (the platform and bin position shown in Fig. 8) so that the bin can be retrieved by a robot (e.g., robot 122) of the automated storage and retrieval system for subsequent storage in the grid (e.g., grid 100). At the same time or at a later time, a second container (e.g., container 730 shown in Fig. 8) may be received by the goods handling system 500 for insertion into a another bin of the automated storage and retrieval system. The process described above may therefore be repeated one or more times for insertion of a respective one or more containers or other items.

Whilst the operation of inserting a container 530 into a bin 502 has been described above, it would be appreciated that the process may be substantially reversed for extracting a container (or other item more generally) from a bin. In such an operation, a bin 502 containing a container 530 may be lowered onto the platform 550 by a robot. The platform 550, supporting the bin 522, may then be lowered into the lowered position. The gripping plates 510, 520, not clamping or gripping any item, are moved in the X direction from a position above the port conveyor 540 to a position above the bin 502 containing the container 530. The platform 550 then raises the bin 502 to the receiving position (or the gripping plates 510, 520 are lowered into the bin), and the gripping plates 510, 520 move towards each other in the Y direction to clamp the container 530 supported on the base of the bin 502. Whilst the gripping plates 510, 520 clamp the container 530 and support its weight, the platform 550 then lowers the bin 502 to the lowered position again (or the gripping plates 510, 520 are lifted out of the bin). The gripping plates 510, 520 then return in the X direction to their position above the port conveyor 540 and release the container 530 on the port conveyor by moving apart from each other in the Y direction. The port conveyor may then drive the container onto an external conveyor 542 or deliver the container to any other suitable external component. The platform 550 may remain in the lowered position, supporting the bin 502 thereon, ready for insertion of another container or item. Alternatively, the platform 550 may raise the empty bin 502 to the raised position so that it can be retrieved by a robot and returned to the storage grid

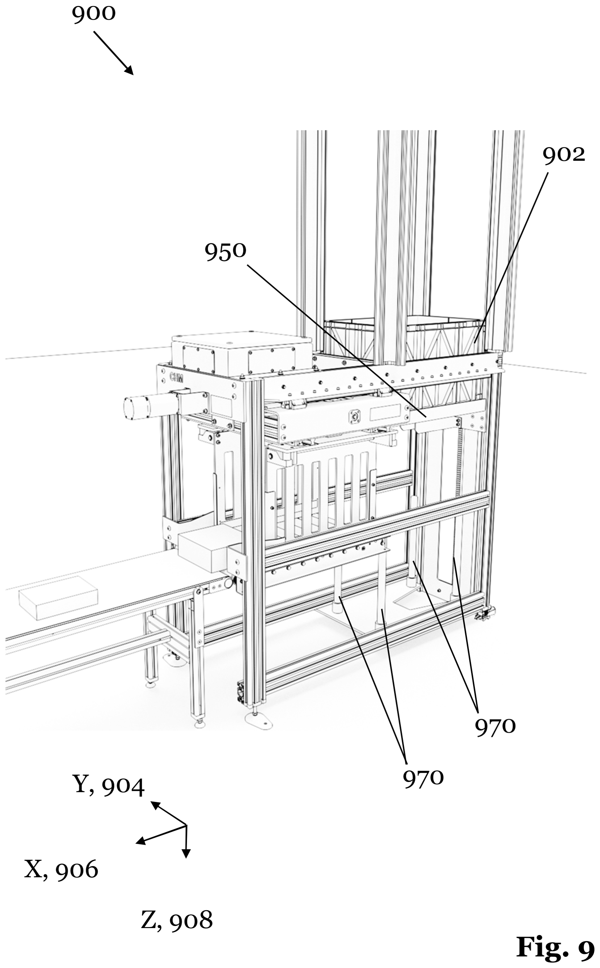

Referring now to Figure 9, a goods handling system 900 according to another embodiment of the present disclosure is shown. The goods handling system 900 comprises the same features as the goods handling system 500 described above and may operate in substantially the same way to the operations for insertion or extraction of items described above. The goods handling system 900 according to this embodiment further comprises one or more support posts 970 arranged beneath the platform 950 (analogous to platform 550) and extending vertically upwards (in the Z direction). The platform 950 may comprise one or more openings corresponding in position and size to the one or more support posts 970, such that the platform can be lowered onto the support posts whilst the support posts protrude through the openings in the platform.

The goods handling system 900 is designed to be compatible with a modified storage bin 902. Fig. 9 shows the platform 950 in the raised position supporting a modified bin 902. The modified bin also comprises a plurality of openings in its base or floor that correspond in position and size to the openings in the platform 950 and the one or more support posts 970. When the platform 950, carrying modified bin 902, is lowered onto the one or more support posts 970, the posts protrude through the respective openings in both the platform 950 and the base of the modified bin, such that the posts protrude into the interior of the bin 902 itself. The modified bin 902 may further comprise a moveable inner baseplate 945. The moveable baseplate 945 is situated inside the body of the bin and resting on the base of the bin's main body. The moveable baseplate 945 is configured to support goods, such as containers or other items, that are stored in the bin 902.

When the platform, carrying the modified bin 902, is lowered onto the one or more support posts 970, the posts protrude through both the openings in the platform and the openings in the base of the bin and engage with the underside of the moveable baseplate 945. As the platform continues to be lowered, the main body of the bin 902 supported thereon is also lowered whilst the moveable baseplate 945 remains supported on the one or more posts 970. The support posts have a fixed vertical height to support the baseplate carrying containers or other items at a corresponding fixed vertical height.

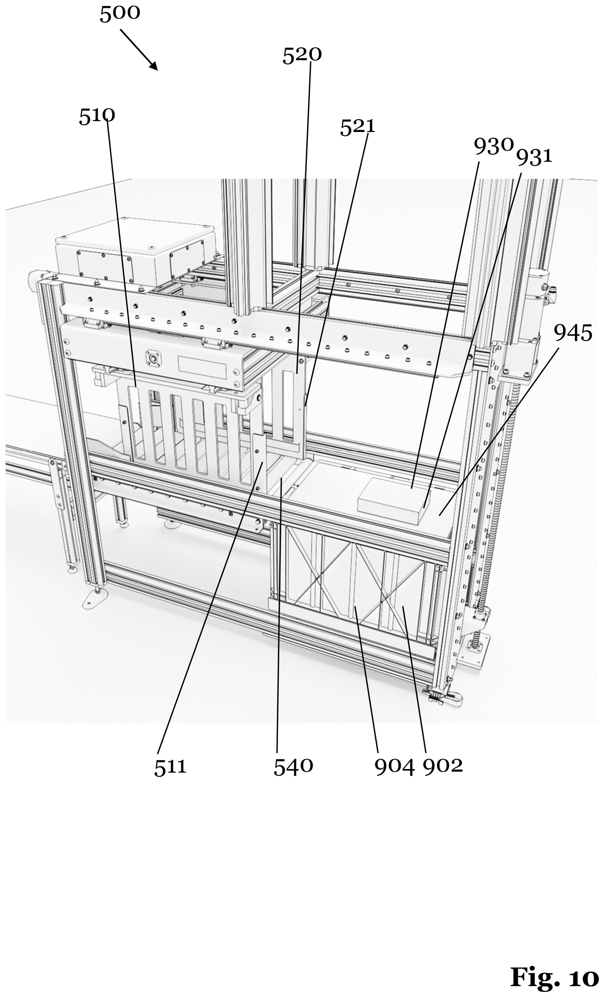

With reference to Fig. 10, an alternative perspective of the goods handling system 900 is shown with the platform 950 supporting the bin 902 in a lowered position. When in the lowered position, the support posts 970 extend through the main body of the 902 and support the baseplate 945 at a height that is substantially equal, or greater than the height of the sidewalls 904 of the bin 902. In addition, the support posts support the baseplate 945 at a height that is substantially equal to the height of the port conveyor and the gripping plates 510, 520. This means that a container 930 or other item stored in the bin 902 on the baseplate 945 may be presented above the sidewalls 904 when the bin 902 is lowered to the lowered position. The gripping plates 510, 520 are then able to freely move in the X direction between a position above the baseplate 945 and a position above the port conveyor 940 when the bin 902 has been lowered.

Also with reference to Fig. 10, there is provided a first arm 511 located on the first plate 510, and a second arm 521 located on the second plate 520. The first arm 511 and the second arm 521 may each protrude inwardly (i.e. toward one another), such that they provide additional horizontal support to any container 930. For example, as shown in Fig. 10, the first arm 511 and the second arm 521 protrude inwardly from the first plate 510 and the second plate 520 respectively such that when the first plate 510 and the second plate 520 are clamped onto the container 930, they may selectively engage with an end 931 of the container 930. In this way, when the manipulator 500 guides the container 930 horizontally by moving the first plate 510 and the second plate 520 in unison, should there be any slippage of the container 930, such as from slow or ineffective conveyor 540, the first arm and the second arm 521 may engage the end 931 of the container 930 and push it along the conveyor 540.

The operation of inserting a container 930 into a modified bin 902 using the goods handling system 900 according to the second embodiment may therefore be streamlined compared to the process using goods handling system 500 according to the first embodiment. Once a container 930 has been received onto the port conveyor 940, and a modified bin 902 has been received onto the platform 950 and lowered to the lowered position (shown in Fig. 10), the gripping plates 510, 520 clamp the container 930 situated on the port conveyor, and move in unison in the X direction towards the baseplate 945, whilst continuing to clamp the container. The gripping plates 910, 920 thereby move the container 930 off of the port conveyor 940 and directly onto the baseplate 945 of the bin 902. Once the gripping plates have positioned the container 930 on the baseplate 945, the gripping plates release the container by moving apart from each other in the Y direction and return to their position above the port conveyor 940. Once the gripping plates are out of the way, the platform 950 can then return the bin 902 to the raised position (shown in Fig. 9) , collecting the baseplate 945 and the container 930 supported thereon on the way (as the bin 902 is raised and the base reaches the height of the top of the support posts 970, the bin base will engage and support the baseplate 945). The bin is then retrieved by a robot in the same manner as described above in relation to the first embodiment.

It would be appreciated that extracting a container or other item from a modified bin occurs in an analogous but reversed operation. A bin 902 containing a container 930 is received on the platform 950 and lowered to the lowered position, thereby leaving the baseplate 945 upon which the container is situated to be supported on the support posts 970 at a height corresponding to the gripping plates 910, 920. The gripping plates 910, 920 then move across from the port conveyor 940 to collect the container 930 from the baseplate 945, and move the container off of the baseplate and onto the port conveyor, before the container is transferred away (e.g., on an external conveyor belt 942). The bin 902 may then be returned to raised position by the platform 950, collecting the baseplate 945 from the support posts on the way, before the bin 902 including the baseplate 945 is retrieved by a robot as described above. Alternatively, the bin 902 may remain in the lowered position with its baseplate remaining on the support posts 970, ready to receive another container or other item being inserted into the bin using the operation described above.

In this way, insertion or extraction of containers/items using the goods handling system 900 is more streamlined since it does not require additional raising or lowering of the bin to/from the receiving position as part of the insertion/extraction process, nor does it require vertical movement of the gripping plates to lower or raise items into or out of a bin. The embodiment of a goods handling system 900 according to Figs. 9 and 10 may therefore be preferred to the embodiment of a goods handling system 500 according to Figs. 5 - 8.

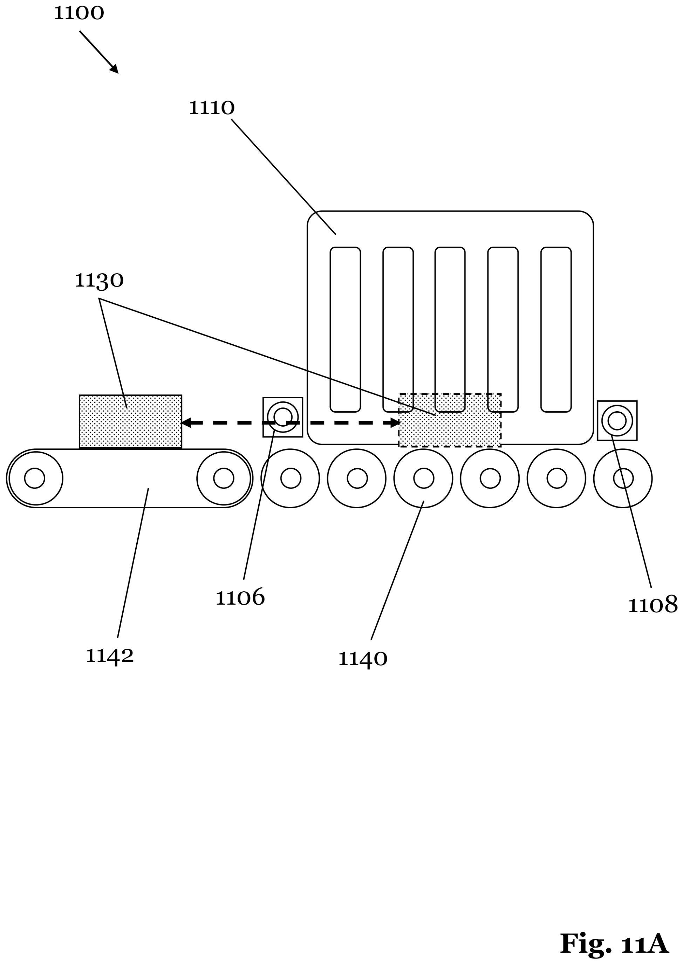

With reference to Fig. 11A, a side-on (i.e., viewed along the Y direction) view of a gripping plate 1110 and port conveyor 1140 of a goods handling system 1100 according to some embodiments of the present disclosure is shown. The goods handling system 1100 depicted in Fig. 11A may be a goods handling system according to any of the embodiments described above. For example, the goods handling system depicted in Fig. 11A may correspond to the goods handling system 500 of Figs. 5 - 8, and/or it may correspond to the goods handling system 900 of Figs. 9 - 10. In general, the gripping plate 1110 corresponds to gripping plates 510 or 910 as described above and port conveyor 1140 correspond to port conveyor 540 or 940 as described above. In particular, port conveyor 1140 may comprise a plurality of rollers.

In addition to the gripping plate 1110 and port conveyor 1140, the goods handling system 1100 comprises a first sensor 1106. The first sensor is arranged on the goods handling system such that it is generally located towards an end of the goods handling system that is adjacent to a component of an external warehouse management system. In general, the goods handling systems described herein may be arranged next to a conveyor, or other component, of a warehouse management system. The interaction between the warehouse management system and the goods handling system 1100 is described in more detail below.

In Fig. 11A, the goods handling system is arranged next to an external conveyor 1142 of a warehouse management system. The first sensor 1106 is arranged adjacent to the external conveyor 1142 and is configured to detect containers (e.g., container 1130) or other items more generally as they pass between the external conveyor 1142 and the port conveyor 1140. In more detail, as a container 1130 is passed from the external conveyor 1142 to the roller 1140 (e.g., as part of a process to insert the container into a bin), the first sensor 1106 detects the container as it crosses the interface from the external conveyor 1142 to the port conveyor 1140. Similarly, as a container 1130 is passed from the port conveyor 1140 to the external conveyor 1142 (e.g., as part of a process to extract the container from a bin and transfer outside of the ASRS), the first sensor 1106 detects the container as it crosses the interface from the port conveyor 1140 to the external conveyor 1142.

In some examples, the first sensor 1106 comprises an optical beam sensor with a transmitter and a receiver arranged on opposite lateral sides of the port conveyor. The transmitter transmits an electromagnetic (e.g., laser, infrared) beam from one side of the port conveyor to a receiver arranged on the opposite side, such that any item passing between the port conveyor 1140 and the external conveyor 1142 breaks the beam. Alternatively, the transmitter and receiver may be arranged on the same side, with a mirror or other reflective material arranged on the other side of the port conveyor that is configured to reflect the beam sent by the transmitter back to the reflector. In either case, as a container or other item passes between the external conveyor 1142 and the port conveyor 1140, the beam between the transmitter and the receiver is broken by the container/item. When the beam is restored (when the container/item reaches a position either side of the optical sensor), the sensor may provide a signal to the goods handling system indicating that the container/item has been transferred on to, or off of, the port conveyor 1140.

It would be appreciated that the first sensor 1106 may additionally or alternatively include any other suitable means for detecting the presence of a container/item on the port conveyor 1140. In one example, the sensor 1106 may include a weight sensor configured to detect the weight of the container on the port conveyor. In another example, the sensor 1106 may be an electrical sensor configured to detect an additional load on the motors driving the port conveyor. In another example, the sensor may comprise any suitable computer vision system including a camera or the like configured to detect the presence of an item on the port conveyor 1140.

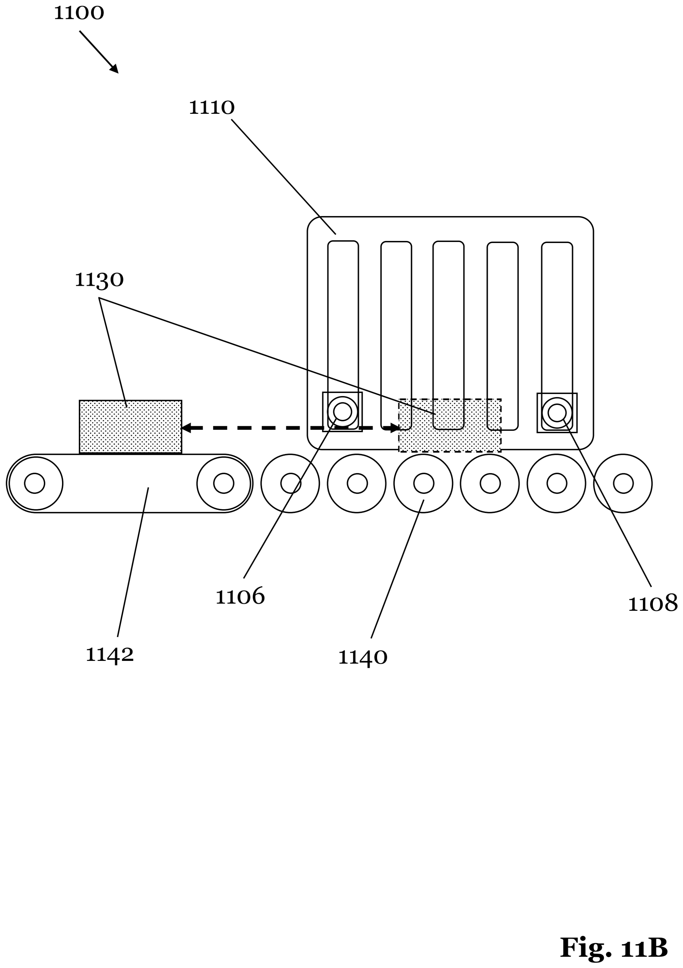

In some embodiments, the goods handling system 1100 further comprises a second sensor 1108. As shown in Fig. 11A, the second sensor 1108 is arranged towards the other end of the port conveyor 1140 (in the X direction) relative to the first sensor 1106. In particular, the second sensor is arranged on the opposite side of the gripping plates 1110, 1120, relative to the first sensor, when the gripping plates are positioned over the port conveyor as shown in Fig. 11. The second sensor may be arranged at substantially the same vertical height as the first sensor. The second sensor is therefore arranged relative to the port conveyor to be able to detect containers/items situated on the port conveyor 1140.

In more detail, the first and second sensors 1106 and 1108 may be used in conjunction to ensure that a container situated on the port conveyor is correctly positioned for clamping between the gripper plates. The two sensors 11106, 1108 may be spaced apart by a distance that corresponds to an internal dimension of a storage bin (e.g., bin 502, 902). Therefore, any container situated on the port conveyor must be positioned in between the two sensors to ensure that the container is able to be clamped and moved by the gripping plates, and that the container will be correctly placed inside the bin/on the baseplate of the bin.

In the event that a container situated on the port conveyor is blocking the beam of either sensor 1106 or 1108, the goods handling system 1100 can determine, based on a signal from the sensor for which the beam is blocked, that the container is incorrectly positioned on the port conveyor. Depending on which sensor is blocked, the goods handling position can adjust the container's position by controlling the port conveyor 1140. That is, the goods handling system can control the port conveyor 1140 to move the container situated thereon, until the container is in a position at which neither sensor beam is blocked. Once the container is correctly positioned, the gripping plates can clamp the container to move it according to the processes described herein.

In the event that a container situated on the port conveyor is blocking the beams of both sensors, the goods handling system can determine, based on the signals received from each sensor indicating the each beam is blocked, that the container is too large. That is, given that the spacing between the sensors corresponds to an internal dimension of the bin, any container situated on the port conveyor that blocks the beams of both sensors is therefore larger than the distance between the sensors and as a result larger than the internal dimension of the bin. In this event, the goods handling system may return the container to the external conveyor 1142 and send an error message to the warehouse management system that provided the container for insertion into a bin.

In this way, the first sensor 1106 may be used as described above to detect when a container is being transferred between an external component such as an external conveyor, and the port conveyor of the goods handling system. The first sensor 1106 may additionally be used in conjunction with the second sensor 1108 to detect containers that are too large for storage in a bin, and to ensure that containers suitable for storage in a bin are correctly positioned on the port conveyor for the gripper plates to engage.

In some embodiments, the goods handling system may further comprise a third sensor (not shown in Fig. 11A) situated between the first and second sensors. The third sensor may be an optical sensor configured to project a beam from a transmitter to a receiver that extends through one of the cut-outs 1124 of the gripper plates 1110, 1120. In some embodiments, the third sensor may be positioned to project a beam through a cut-out located substantially in the centre of the gripping plates. The third sensor may be used to detect the presence of a container or other item between the gripping plates, and may therefore be used in conjunction with the first and second sensors to ensure that a container situated on the port conveyor 1140 is located substantially in the centre of the gripping plates.

Additionally or alternatively, the third sensor may be used to determine when to slow down the port conveyor 1140 during an extraction process. In particular, as a container is being transported by the port conveyor 1140 towards the external conveyor 1142, the third sensor can be used to detect when the container is close to, or at, the external conveyor (when the beam transmitted by the transmitter of the third sensor is detected by the receiver). At this point, the goods handling system may start to reduce or altogether stop power supply to the port conveyor to allow them to slow down, preventing the container arriving at the external conveyor too fast and/or reducing wasted energy supply to the port conveyor.

Referring now to Fig. 11B, an alternative arrangement of the first and second sensors 1106, 1108 of the goods handling system 110 is shown. In this embodiment, the first and second sensors are arranged such that their optical beams project through the cut-outs 1124 situated at each end of the gripping plates. The function of the first and second sensors 1106, 1108 may be substantially identical to the functions described above with respect to Fig. 11A. The first and second sensors 1106, 1108 may still be spaced apart such that the distance spanned therebetween corresponds to an internal dimension of the bin. To account for this, the gripping plate may be made longer than the internal dimension of the bin. By arranging the sensors in the manner shown in Fig. 11b, such that the separation between the two sensors in the direction of travel of the containers/items is less than the extent of the gripping plates in that same direction, it's possible to ensure that any container situated on the port conveyor 1140 is more accurately aligned between the gripping plates. Whilst not shown, the embodiment shown in Fig. 11B may further comprise the third sensor with substantially the same function as described above.

The operation of inserting one or more items into a storage bin, or extracting one or more items from a storage bin, will be now be described with reference to a goods handling system according to any of the embodiments disclosed herein.

As described above, a goods handling system is capable of receiving one or more items from an external component of a warehouse management system, and inserting those one or more items into one or more storage bins for subsequent storage in a storage grid of an automated storage and retrieval system (ASRS). The goods handling system is also capable of extracting one or more items from one or more storage bins that have been retrieved from the storage grid, and transporting those one or more items away from the ASRS to an external component of the warehouse management system. In the examples described herein, the external component interfacing with the goods handling systems is a conveyor, however it would be appreciated that in other examples, the external component may be any suitable system or apparatus capable or transferring items to or from the goods handling system, such as a robotic arm, or any other suitable manipulator.

In general, the goods handling system, storage grid, and the robots delivering and retrieving bins between the storage grid and the goods handling system, may be controlled by a single ASRS control system. Among other things, the ASRS control system tracks the whereabouts of the robots and the bins, and controls workflows through which bins are transported between the storage grid and ports or other goods handling systems to pick or restock items contained in those bins.

Generally speaking, the ASRS control system may not track the contents of the bins. Instead, a separate warehouse management system (WMS) tracks the contents of the bins of the ASRS, and stores associations between bin identifiers and the items contained therein. The WMS may execute orders or other tasks that require the insertion or extraction of items from the ASRS. For example, to fulfil a customer order, the WMS may require extraction of a particular number of a particular item from the ASRS. To do so, the WMS identifies, using its stored associations (e.g., in a look-up table) which bin identifier(s) are associated with the requested items, and sends a request, including the bin identifier(s) for the bin(s) containing the requested item(s) to the ASRS. Alternatively, to store (insert) new items in the ASRS, the WMS may identify (based on its stored associations) one or more empty bins in the ASRS that could be used to store the new items. The WMS then sends a request, including the bin identifier(s) for the empty bins to the ASRS.

In general, the ASRS receives the request from the WMS and determines the storage location of the bins corresponding to the bin identifier(s) contained in the request. The ASRS then creates tasks for one or more robots to retrieve the one or more requested bins from their storage locations, and deliver the bins to a goods handling system, such as a goods handling system as described herein. Items may then be transferred into or out of a bin located at the goods handling station in the manner described in detail above.

As part of any insertion or extraction process, the items are transferred between the goods handling system, which is controlled by the ASRS, and the external component (e.g., external conveyor), which is separately controlled by the WMS. Because the goods handling systems described herein are automated and do not require any human operator input to execute an item insertion or extraction operation, the transfer of items between the two systems require specific communication protocols to facilitate smooth item transfers and to avoid potential errors.

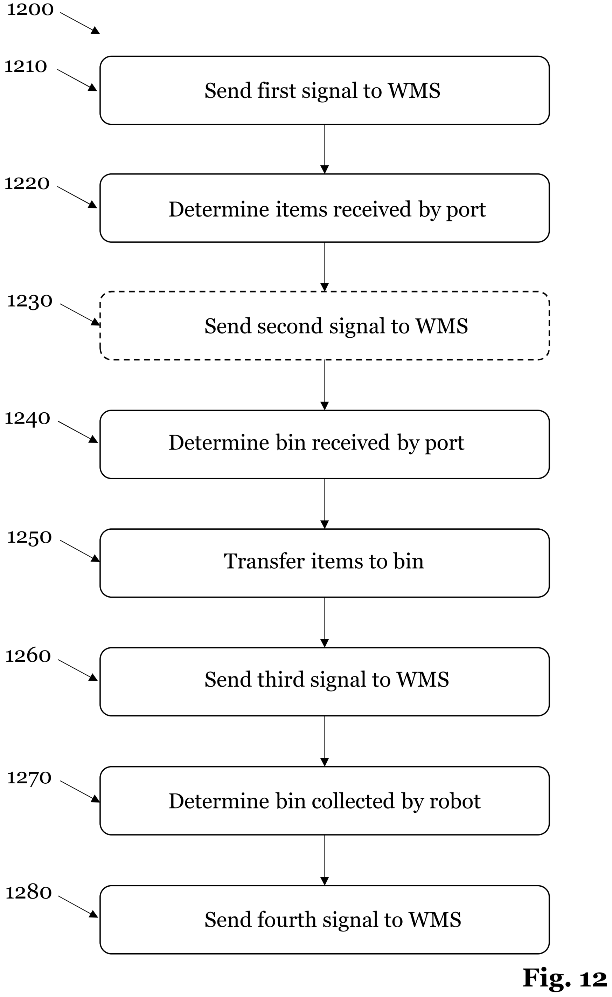

With reference to Figs. 12 - 15, methods of inserting one or more items into, or extraction one or more items out of, an ASRS are described from the perspective of both the ASRS and the WMS.

Referring first to Fig. 12, a flowchart 1200 for a method of inserting one or more items into an ASRS is shown. The method 1200 describes the communication protocol, from the perspective of the ASRS, between the ASRS and the WMS, when items are transferred from an external component controlled by the WMS to the goods handling system (also referred to as a port) controlled by the ASRS and subsequently into a bin located at the port.

Method 1200 comprises a step 1210 of sending, by the ASRS, to the WMS, a first signal. The first signal indicates that the port of the ASRS is available for receiving one or more items from the WMS for insertion into a bin. The sending and receiving of signals between the ASRS and WMS may be carried out by any suitable connection, such as via a network or via a wired connection.

After sending the first signal to the WMS, the method comprises a step 1220 of determining that one or more items have been received by the port. In particular, this may take place when the WMS has received the first signal from the ASRS and subsequently transfers, via the external conveyor of the WMS, one or more items from the external conveyor to the port conveyor of the port. The step of determining that one or more items have been received by the port may comprise using sensors, such as an optical sensor 1106, positioned adjacent to the interface between the external conveyor and the port. The sensors detect the one or more items as they are transferred onto the port conveyor of the port, and provide a signal to the ASRS indicating that one or more items have been received.

Optionally, after determining that the one or more items have been received at the port, the method 1200 comprises a step 1230 at which the ASRS may send a second signal to the WMS indicating that the one or more items have been received. As described below, on receipt of the second signal, the WMS may stop power the external conveyor.

The method 1200 further comprises a step 1240 of determining that a bin has been received at the port. Although shown in the flowchart of Fig. 12 as occurring after steps 1210 - 1230, step 1240 may generally occur before, or after, or concurrently with the preceding steps 1210 - 1230. The determination that the bin has been received by the port may be made by the ASRS responsive to receiving a signal from the robot delivering the bin to the port. The signal from the robot may indicate that the robot has released the bin after lowering it through a port column to the port, thus indicating that the bin has been received at the port. Additionally or alternatively, the port may comprise one or more sensors configured to detect the presence of a bin received at the port.

When the ASRS has determined that the one or more items have been received at the port (step 1220), and that the bin has also been received at the port (step 1240), the method comprises a step 1250 of causing the one or more items to be transferred to the bin. A transfer of items into a bin is described in detail above with reference to the various goods handling systems described herein. Step 1250 may thus comprise the ASRS sending an instruction to the port to cause the gripping plates to engage (clamp) the one or more items, and move them across to the bin.

Once the one or more items have been transferred to the bin, the method comprises a further step 1260 of sending, by the ASRS, a third signal to the WMS. The third signal indicates that the one or more items have been transferred to the bin. The third signal may be sent after the gripping plates have released the items in the bin/on the baseplate of the bin, or when the gripping plates have returned to their original position away from the bin and over the port conveyor of the port.

After the one or more items have been transferred to the bin according to step 1250, the method further comprises a step 1270 of determining that the bin has been collected by a robot of the ASRS. Determining that the bin has been collected by a robot may be carried out in a similar manner to step 1240. That is, determining that the bin has been collected by a robot of the ASRS may comprise the robot sending a signal to the ASRS indicating it has successfully engaged and lifted the bin from the port, thus indicating that the robot has successfully collected the bin.

Responsive to determining that the robot has successfully collected the bin according to step 1270, the method comprises a step 1280 of sending a fourth signal to the WMS. The fourth signal indicates that the bin has been collected from the port, thus also indicating that the port is ready to carry out further item insertion/extraction operations.

In some embodiments, method 1200 further comprises, prior to step 1210, receiving a request from the WMS to carry out an operation, at a port of the ASRS, to insert one or more items from the WMS into a storage bin of the ASRS. In response to receipt of the request from the WMS, the ASRS determines whether the port is available to carry out the insertion operation. Responsive to the ASRS determining that the port is available to carry out the insertion operation, the ASRS sends the first signal to the WMS according to step 1210 indicating that the port is ready to receive the one or more items for insertion.

In some embodiments, the request received from the WMS includes one or more bin identifiers. The one or more bin identifiers correspond to bins in the ASRS that have been selected by the WMS to insert the one or more items into. In some examples, the bin identifiers may correspond to empty bins. As described above, the WMS tracks the contents of the bins of the ASRS, and may therefore select an empty bin for an insertion operation. The WMS send the identifier for that empty bin to the ASRS as part of the request. In response to receiving the request including the bin identifier, the ASRS identifies the storage grid location of the bin(s) corresponding to the bin identifier(s) and causes those bin(s) to be retrieved by one or more robots and sent to the port.

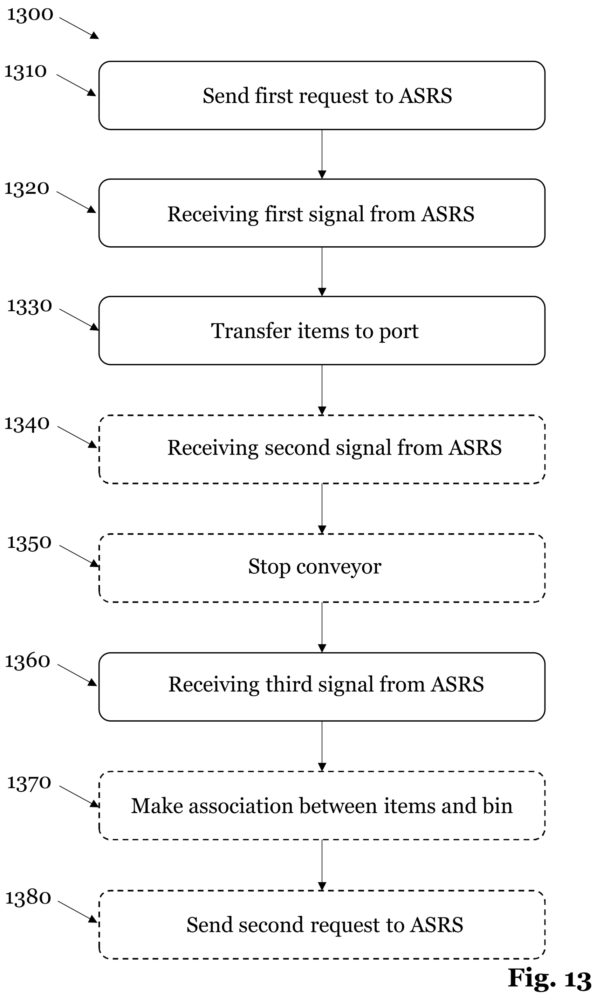

Referring now to Fig. 13, a flowchart 1300 for a method of inserting one or more items into an ASRS is shown. The method 1300 describes the communication protocol, from the perspective of the WMS, between the ASRS and the WMS, when items are transferred from an external component controlled by the WMS to the goods handling system (also referred to as a port) controlled by the ASRS and subsequently into a bin located at the port.

Method 1300 comprises a step 1310 of sending, by the WMS, a first request to the ASRS to carry out an operation, at a port of the ASRS, to insert one or more items from the WMS into a storage bin of the ASRS. In some embodiments, the request may comprise one or more bin identifiers. As described above, the one or more bin identifiers correspond to bins in the ASRS that have been selected by the WMS to insert the one or more items into. In some examples, the bin identifiers may correspond to empty bins.

Following step 1310, the method 1300 comprises a step 1320 of receiving, by the WMS and from the ASRS, a first signal. The first signal indicates that the port of the ASRS is available for receiving one or more items from the WMS for insertion into a bin.

Upon receipt of the first signal, method 1300 proceeds to step 1330 at which the WMS causes the one or more items to be transferred to the port. Transfer of items between a component of the WMS (e.g., a conveyor) and the port are described in more detail above. Causing the one or more items to be transferred to the port may comprise causing the conveyor to deliver the items to the port conveyor of the port.

Optionally, following step 1330, the method may comprise a step 1340 of receiving, by the WMS and from the ASRS, a second signal that indicates that the one or more items have been received at the port. As described above, the port may comprise one or more sensors configured to detect when an item has been transferred to the port. Upon detection of the one or more items, the ASRS sends the second signal to the WMS.

Optionally, upon receiving the second signal from the ASRS, the method 1300 comprises a step 1350 of stopping power to the external conveyor, since the one or more items on the conveyor have now been transferred to the port.

At some time after receiving the first and/or second signal, method 1300 comprises a step 1360 of receiving, by the WMS and from the ASRS, a third signal indicating that the one or more items have been transferred to the bin. As described above, the third signal may be sent by the ASRS to the WMS after the gripping plates have released the items in the bin/on the baseplate of the bin, or when the gripping plates have returned to their original position away from the bin and over the port conveyor of the port.

Optionally, after receiving the third signal at step 1360, the method 1300 further comprises a step (not shown in the flowchart of Fig. 13) of receiving, by the WMS and from the ASRS, a fourth signal indicating that the that the bin has been collected from the port, thus also indicating that the port is ready to carry out further item insertion/extraction operations.

Responsive to receipt of either the third signal or the fourth signal, the method 1300 optionally comprises a step 1370 at which the WMS makes an association between the one or more items and the bin identifier of the bin that the one or more items have been transferred into. Making the association between the one or more items and the bin identifier may comprise recording in computer software, for example in a look-up table or by any other suitable means, that the one or more items are stored in the bin of the ASRS that corresponds to the bin identifier. Therefore, for any subsequent task to retrieve those one or more items, the WMS may determine that the items are stored in the bin with the corresponding identifier, and send that identifier to the ASRS to retrieve that particular bin.

Making the association between the one or more items and the bin identifier may take place after receipt of the third signal, which is sent by the ASRS when the port has successfully transferred the one or more items into the bin or onto the bin baseplate. Alternatively, the association may take plate after receipt of the fourth signal, which is sent by the ASRS when a robot has successfully retrieved the bin, containing the one or more items, from the port.

In addition to making the association between the one or more items and the bin identifier after receipt of the third and/or fourth signal from the ASRS, the WMS may additionally send, according to step 1380, a further request to the ASRS for insertion of one or more additional items into another bin, or for extraction of one or more items that are already stored by the ASRS. The further request sent by the WMS will also include one or more bin identifiers, corresponding to the one or more bins selected by the WMS that are required for subsequent insertion or extraction operation.

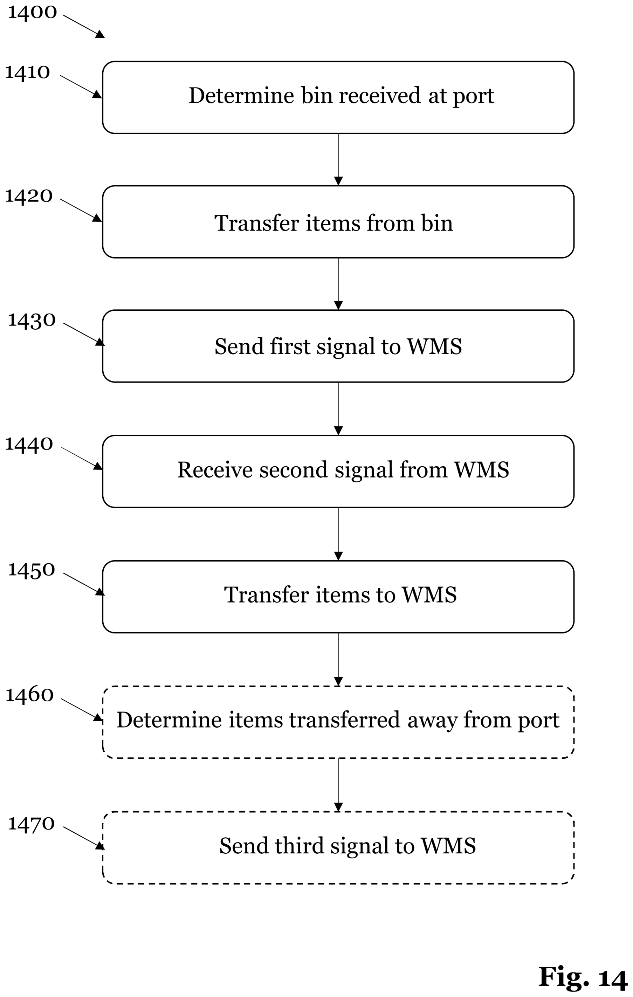

Referring first to Fig. 14, a flowchart 1400 for a method of extracting one or more items from an ASRS is shown. The method 1400 describes the communication protocol, from the perspective of the ASRS, between the ASRS and the WMS, when items are removed from a bin located at a goods handling system (also referred to as a port) controlled by the ASRS and transferred to an external component controlled by the WMS.

Method 1400 comprises a first step 1410 of determining that a bin of the ASRS has been received at the port. The bin comprises one or more items that have been requested for extraction by the WMS. The determination that the bin has been received by the port may be made by the ASRS responsive to receiving a signal from the robot delivering the bin to the port. The signal from the robot may indicate that the robot has released the bin after lowering it through a port column to the port, thus indicating that the bin has been received at the port. Additionally or alternatively, the port may comprise one or more sensors configured to detect the presence of a bin received at the port.

After determining that the bin has been received at the port, the method 1400 comprises a second step 1420 of causing the one or more items stored in the bin to be transferred out of the bin. A transfer of items out of a bin is described in detail above with reference to the various goods handling systems described herein. Step 1420 may thus comprise the ASRS sending an instruction to the port to cause the gripping plates to move over to the bin, engage (clamp) the one or more items, and move the one or items across to the port conveyor of the goods handling system.

Once the one or more items have been removed from the bin according to step 1420, the method 1400 proceeds to a step 1430 at which the ASRS sends a first signal to the WMS. The first signal indicates that the one or more items requested by the WMS have been transferred out of the bin by the port. The first signal may be sent after the gripping plates have moved away from the bin and are positioned over the port conveyor, or when the gripping plates have released the items on the port conveyor.

At some time after sending the first signal to the WMS, the ASRS receives at a step 1440 a second signal from the WMS. The second signal indicates to the ASRS that a component of the WMS (e.g., external conveyor that is adjacent to the port) is ready to receive the one or more items from the port.

Upon receipt of the second signal from the WMS, the method proceeds to step 1450 at which the ASRS causes the one or more items to be transferred from the port to the external component of the WMS. A transfer of items between a goods handling system and an external component of a WMS is described in detail above with reference to the various goods handling systems described herein. Causing the one or more items to be transferred from the port to the external component of the WMS may comprise causing the port conveyor of the port to transport the one or more items towards the external component and continue transporting the one or more items until they have been transported off of the port conveyor. The presence or lack thereof of the one or more items on the port conveyor may be detected using one or more sensors as described herein.

In some embodiments, method 1400 comprises, prior to step 1410, receiving a request from the WMS to carry out an operation, at a port of the ASRS, to extract one or more items stored in a bin of the ASRS. In response to receipt of the request from the WMS, the ASRS determines whether the port is available to carry out the extraction operation. The request received from the WMS includes one or more bin identifiers. The one or more bin identifiers correspond to the one or more bins stored by the ASRS that contain the one or more items that have been requested by the WMS. As described above, the WMS tracks the contents of the bins of the ASRS, and is therefore able to identify the bin identifier corresponding to any given item that is requested, for example to fulfil a customer order. As part of the request sent by the WMS to the ASRS, the WMS therefore sends the bin identifier(s) for the bin(s) that the WMS has identified as containing the item(s) that are requested.

Responsive to the ASRS determining that the port is available to carry out the extraction operation, the ASRS may return a message to the WMS indicating that the port is available for extracting the requested items and providing them to the WMS. In response to receiving the request including the bin identifier(s) from the WMS, the ASRS identifies the storage grid location of the bin(s) corresponding to the bin identifier(s) and causes those bin(s) to be retrieved by one or more robots and sent to the port.

In some embodiments, after step 1450 of causing the one or more items to be transferred from the port to the external component of the WMS, the method optionally further comprises a step 1460 of determining that the one or more items have been transferred away from the port (e.g., using one or more sensors as described herein) and optionally further comprises a subsequent step 1470 of sending a third signal from the ASRS to the WMS. The third signal indicates that the one or more items have been transferred away from the port and have thus been transferred to the component of the WMS.

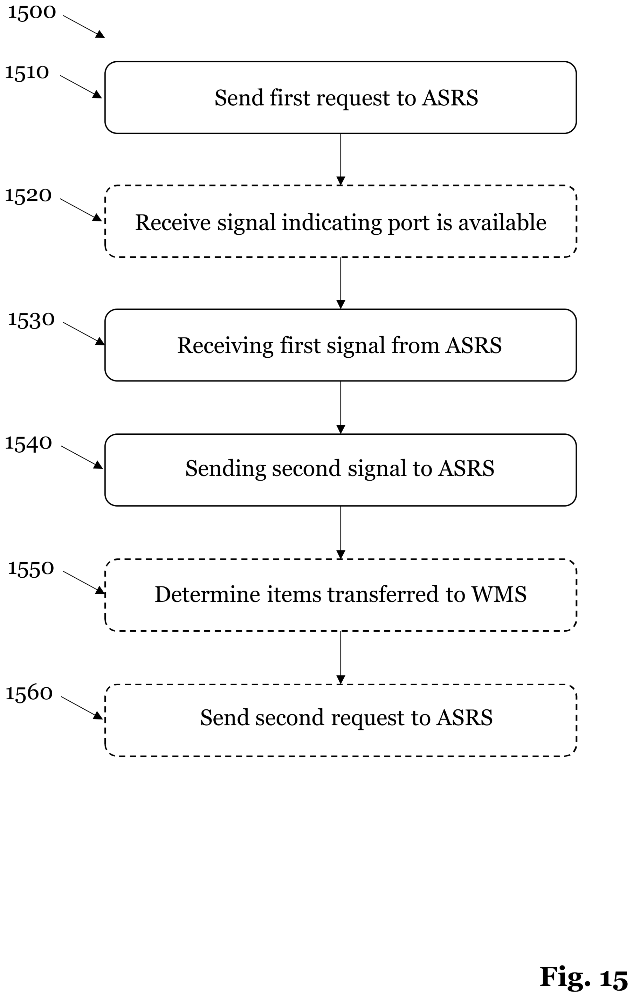

Referring first to Fig. 15, a flowchart 1500 for a method of extracting one or more items into an ASRS is shown. The method 1500 describes the communication protocol, from the perspective of the WMS, between the ASRS and the WMS, when items are removed from a bin located at a goods handling system (also referred to as a port) controlled by the ASRS and transferred to an external component controlled by the WMS.

The method 1500 comprises a first set 1510 of sending, by the WMS and to the ASRS, a request to carry out an operation, at a port of the ASRS, to extract one or more items stored in a bin of the ASRS. The request includes one or more bin identifiers corresponding to the one or more bins stored by the ASRS that contain the one or more items that have been requested by the WMS. The WMS therefore sends the bin identifiers(s) for the bin(s) that the WMS has identified as containing the requested items.

Optionally, after sending the request to the ASRS, the method 1500 may comprise a step 1520 at which the WMS receives, from the ASRS, a signal indicating that the port is available for extracting the requested items and providing them to the WMS.

Following step 1510, and optionally step 1520, the method further comprises a step 1530 of receiving, by the WMS and from the ASRS, a first signal indicating that the one or more requested items have been transferred out of the bin by the port of the ASRS. The method may then optionally comprise a step 1530 at which the WMS updates a record to reflect that the one or more requested items are no longer stored in a bin with the associated bin identifier. In other words, the WMS may disassociate the one or more items that have been removed from the bin with that bin.

In addition, in response to receiving the first signal from the ASRS, the method 1500 comprises a step 1540 of sending, by the WMS and to the ASRS, a second signal. The second signal indicates to the ASRS that a component of the WMS (e.g., external conveyor that is adjacent to the port) is ready to receive the one or more items from the port. Step 1540 may comprise the WMS making a determination that the component of the WMS is ready and available to receive the one or more items from the port. For example, this may involve carrying out a check to ensure the component is not already handling any other items. Once the WMS has confirmed that the component is able to receive the one or more items from the port, the WMS sends the second signal to the ASRS.

In some embodiments, step 1540 further comprises causing the external component of the WMS to enter into a receiving state. In some embodiments, the external component is a conveyor as described herein, in which case step 1540 may involve causing the conveyor to start moving in a manner to carry items away from the port. Thus, when the one or more items are transferred from the port to the conveyor, the conveyor is already operating to receive the one or more items and carry them away.

Optionally, method 1500 further comprises a step 1550 of determining that the one or more items have been transferred from the port of the ASRS and have been received by the external component of the WMS. This may involve receiving a third signal from the ASRS indicating that the one or more items have been transferred. Additionally or alternatively, the WMS may comprise sensors (such as the optical sensors described herein) that detect the presence of the one or more items as they arrive on the conveyor of the WMS.

After determining items have been transferred from the port to the WMS, the method 1500 optionally further comprises a step 1560 of sending, by the WMS and to the ASRS, a second request to carry out an operation, at a port of the ASRS, to extract one or more items from, or insert one or more items into, a bin of the ASRS.

In one particular example, following the removal of items from a bin according to the method 1400 and 1500, a request to insert a new one or more items into the same bin may be sent to the ASRS. In other words, an insertion process may immediately follow an extraction process using the same bin, which can remain at the port in between the two processes, thereby streamlining the overall operation.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.
The following embodiments are also provided:
1. A goods handling system configured to transfer items between a bin of an storage grid of an automated storage and retrieval system, and a component of a warehouse management system, the goods handling system comprising:
   a goods receiving conveyor configured to interface with the component of the warehouse management system and transport items therebetween;
   one or more manipulators configured to transport items between the bin and the goods receiving conveyor; and
   one or more sensors configured to detect items on the goods receiving conveyor.
2. The goods handling system of clause 1, wherein the one or more manipulators comprise a pair of gripping plates configured to clamp items therebetween and move the items between the goods receiving conveyor and the bin.
3. The goods handling system of clause 1 or 2, wherein the one or more sensors are optical beam sensors comprising a beam transmitter and a beam receiver, and wherein the sensors detect the presence of items on the goods receiving conveyor when the beam transmitted from the transmitter to the receiver is blocked.
4. The goods handling system of any preceding clause, wherein the one or more sensors comprise at least one sensor arranged at an end of the goods receiving conveyor adjacent to the interface with the component of the warehouse management system, such that the at least one sensor is capable of detecting items being transferred between the goods receiving conveyor and the component of the warehouse management system.
5. The goods handling system of any preceding clause, wherein the one or more sensors comprise a pair of sensors arranged at opposite ends of the goods receiving conveyor to detect the position of items arranged thereon.
6. The goods handling system of clause 5, wherein the pair of sensors are arranged such that, when the gripping plates are positioned over the goods receiving conveyor, the sensors are arranged at opposite ends of the gripping plates to detect the position of items between the gripping plates.
7. The goods handling system of claim 6, wherein the goods receiving conveyor is configured to adjust the position of items arranged thereon to align the items with the gripping plates based on signals received from the pair of sensors.
8. The goods handling system of claim 6 or 7, wherein the pair of sensors comprise optical beam sensors configured to project beams through openings in the gripping plates.
9. The goods handling system of any preceding clause, wherein the one or more sensors comprise a third sensor arranged to detect items being transported from the goods receiving conveyor to the component of the warehouse management system, and wherein the goods handling system controls the speed of the goods receiving conveyor as it transports items to the component based on signals received from the third sensor.

## Claims

1. A computer-implemented method of inserting one or more items into an automated storage and retrieval system, the method comprising:
sending, to a warehouse management system, a first signal indicating that a port of the automated storage and retrieval system is ready to receive the one or more items from a component of the warehouse management system;
determining that the one or more items have been received at the port;
responsive to determining that the one or more items have been received at the port, sending a second signal to the warehouse management system indicating that the one or more items have been received at the port;
determining that a bin of the automated storage and retrieval system has been received at the port;
responsive to determining that the one or more items and the bin have been received at the port, causing the one or more items to be transferred to the bin;
sending a third signal to the warehouse management system indicating that the one or more items have been transferred to the bin;
determining that the bin has been collected by a robot of the automated storage and retrieval system; and
responsive to determining that the bin has been collected by the robot, sending a fourth signal to the warehouse management system indicating that the bin has been collected by the robot.

2. The computer-implemented method of claim 1, wherein prior to sending the first signal, the method comprises:
receiving a request from the warehouse management system to insert one or more items into the automated storage and retrieval system;
determining whether the port is available to receive one or more items for insertion into the automated storage and retrieval system, wherein the first signal is sent to the warehouse management system responsive to determining that the port is available.

3. The computer-implemented method of claim 2, wherein the request from the warehouse management system includes a bin identifier for a bin selected for the one or more items to be stored in, and wherein the bin received at the port corresponds to the bin identifier.

4. A computer-implemented method of insertion one or more items into an automated storage and retrieval system, the method comprising:
sending a first request to an automated storage and retrieval system to insert the one or more items into the automated storage and retrieval system, the first request including a bin identifier corresponding to a bin of the automated storage and retrieval system;
receiving, from the automated storage and retrieval system, a first signal indicating that a port of the automated storage and retrieval system is ready to receive the one or more items from a component of the warehouse management system;
responsive to receiving the first signal, causing the one or more items to be transferred to the port;
receiving, from the automated storage and retrieval system a second signal indicating that the one or more items have been received at the port;
receiving, from the automated storage and retrieval system, a third signal indicating that the one or more items have been transferred to the bin corresponding to the bin identifier.

5. The computer-implemented method of claim 4, wherein the component of the warehouse management system is a conveyor, and wherein the method comprises stopping the conveyor responsive to receiving the second signal indicating that the one or more items have been received at the port.

6. The computer-implemented method of claim 4 or 5, wherein the method further comprises causing the one or more items to be associated with the bin identifier in response to receiving the third signal indication that the one or more items have been transferred to the bin corresponding to the bin identifier.

7. The computer-implemented method of any of claims 4 to 6, further comprising receiving, from the automated storage and retrieval system, a fourth signal indicating that the bin has been collected by a robot of the automated storage and retrieval system and, responsive to receiving the fourth signal, sending a second request to the automated storage and retrieval system to insert or extract one or more additional items into or from the automated storage and retrieval system.

8. A computer-implemented method of extracting one or more items from an automated storage and retrieval system, the method comprising:
determining that a bin of the automated storage and retrieval system has been received at a port of the automated storage and retrieval system;
responsive to determining that the bin has been received at the port, causing the one or more items be transferred out of the bin;
sending a first signal to the warehouse management system indicating that the one or more items have been transferred out of the bin;
receiving, from the warehouse management system, a second signal indicating that a component of the warehouse management system is ready to receive the one or more items from the port;
responsive to receiving the second signal, causing the one or more items to be transferred from the port to a component of the warehouse management system.

9. The computer-implemented method of claim 8, further comprising determining that the one or more items have been transferred away from the port, and responsive to determining that the one or more items have been transferred away from the port, sending a third signal to the warehouse management system indicating that the one or more items have been transferred away from the port.

10. The computer-implemented method of claim 8 or 9, wherein prior to determining that a bin of the automated storage and retrieval system has been received at the port, the method comprises:
receiving a request from the warehouse management system to extract the one or more items from the automated storage and retrieval system, the request comprising a bin identifier for the bin of the automated storage and retrieval system containing the one or more items;
determining whether the port is available to receive one or more items for extraction from the automated storage and retrieval system; and
responsive to determining that the port is available, causing the bin corresponding to the bin identifier to be retrieved from a storage area of the automated storage and retrieval system and delivered to the port.

11. A computer-implemented method of extracting one or more items from an automated storage and retrieval system, the method comprising:
sending a first request to an automated storage and retrieval system to extract the one or more items from the automated storage and retrieval system, the first request including a bin identifier corresponding to a bin of the automated storage and retrieval system containing the one or more items;
receiving, from the automated storage and retrieval system, a first signal indicating that the one or more items have been transferred out of the bin;
responsive to receiving the first signal, sending, to the automated storage and retrieval system, a second signal indicating that a component of the warehouse management system is ready to receive the one or more items from a port of the automated storage and retrieval system; and
determining that the one or more items have been received by the component of the warehouse management system.

12. The computer-implemented method of claim 11, wherein determining that the one or more items have been received by the warehouse management system comprises receiving a third signal from the automated storage and retrieval system indicating that the one or more items have been transferred away from the port.

13. The computer-implemented method of claim 12, wherein the method further comprises, responsive to determining that the one or more items have been received by the component of the warehouse management system, sending a second request to the automated storage and retrieval system to insert or extract one or more additional items into or from the automated storage and retrieval system.

14. A system comprising one or more processors and one or more computer-readable media storing instructions that, when executed by the one or more processors, cause the one or more processors to carry out the method of any preceding claim.

15. A computer-readable medium storing instructions that, when executed by one or more processors, cause the one or more processors to carry out the method of any of claims 1 to 13.
